# EUROPEAN PATENT SPECIFICATION

(11) **EP 1 533 337 B1**
(45) Date of publication and mention of the grant of the patent: **17.01.2007**
(21) Application number: 04026497.0
(22) Date of filing: 09.11.2004
(51) Int. Cl.: C08K 7/06, C08K 3/00

(54) **Thermally conductive body and method of manufacturing the same**
Wärmeleitfähiger Körper und seine Herstellungsmethode
Matiere thermoconductrice ainsi que procede de preparation

(30) Priority: 12.11.2003 JP 2003382841
(43) Date of publication of application: 25.05.2005
(73) Proprietor: POLYMATECH CO., LTD., Tokyo 103-8424 (JP)
(72) Inventor: Ishihara, Natsuko, Kita-ku Tokyo 114-0014 (JP)
(74) Representative: Hüttermann, Aloys

(56) References cited:
- EP-A- 1 352 922
- PATENT ABSTRACTS OF JAPAN vol. 2002, no. 02, 2 April 2002 (2002-04-02) & JP 2001 284859 A (JSR CORP), 12 October 2001 (2001-10-12)

## Description

The present invention relates to a thermally conductive body and a method of manufacturing the same. Such a thermally conductive body is disposed in an electronic device between an electronic part and a cooling member, such as a radiator or a metal heat transfer plate, and transfers heat generated from the electronic part.

In recent years, with the performance of electronic elements represented by a CPU of a computer becoming high, the power consumption of electronic elements has been increasing and, at the same time, the amount of heat generated from electronic elements has also been increasing. Since the processing capability of electronic elements decreases due to heat, it is necessary to avoid heat accumulation in electronic elements. Therefore, the cooling of electronic elements becomes an important issue for maintaining the performance of electronic elements.

Hence, high thermal conductivity is required for such a thermally conductive body that is disposed between an electronic part and a cooling member (a radiator or the like) and transfers heat generated from the electronic part to the cooling member. For example, Japanese Patent Laid-Open Publication No. 63-20340 discloses a thermally conductive body that is formed from a composition in which a thermally conductive filler is blended in a polymer matrix material. It is known that usually, in such a thermally conductive body, the higher the content of thermally conductive filler in the thermally conductive body, the more the thermally conductive body will exhibit high thermal conductivity. However, the viscosity of such a composition generally increases as the amount of thermally conductive filler increases. As a result, workability and processability, such as formability, of the composition deteriorates. For this reason, the content of the thermally conductive filler in the composition should be below a certain level. Therefore, high thermal conductivity cannot be obtained in a thermally conductive body formed from such a composition.

In Japanese Patent Laid-Open Publications No. 9-283955, No. 11-279406, No. 2002-97372 and No. 11-302545, there are disclosed thermally conductive compositions and bodies in which carbon fibers are blended as a thermally conductive filler. In thermally conductive compositions and bodies described in these publications, due to the blending of carbon fibers, the viscosity of the compositions increases and then the fluidity of the compositions decreases. For this reason, the mixing of air in the compositions degrades the workability of the compositions. When carbon fibers are oriented in a direction to increase the thermal conductivity in that direction, such high viscosity and low fluidity of the compositions inhibits the carbon fibers from highly orienting. Accordingly, a resultant thermally conductive body cannot obtain sufficiently high thermal conductivity.

The present invention addresses the conventional problems above-described. The objective of the present invention is to provide a thermally conductive body capable of exhibiting high thermal conductivity and a method of manufacturing the same.

The present invention provide a thermally conductive body formed from a thermally conductive composition. The thermally conductive composition includes a polymer matrix material; thermally conductive fibers, wherein average fiber diameter of the thermally conductive fibers is in a range from 5 to 15 µm and average fiber length of the thermally conductive fibers is in a range from 70 to 130 µm, and wherein the thermally conductive fibers contain fine fibers having a length of 20 µm or less in not more than 20 percent of the entire quantity of the thermally conductive fibers; and a non-fibrous thermally conductive filler. The thermally conductive fibers further have diamagnetic properties, and in the thermally conductive body, the thermally conductive fibers are directionally oriented.

The present invention also provide a method for manufacturing a thermally conductive body including a polymer matrixmaterial, thermally conductive fibers and a non-fibrous thermally conductive filler. Average fiber diameter of the thermally conductive fibers is in a range from 5 to 15 µm and average fiber length of the thermally conductive fibers is in a range from 70 to 130 µm. The thermally conductive fibers contains fine fibers having a length of 20 µm or less in not more than 20 percent of the entire quantity of thermally conductive fibers. The thermally conductive fibers further have diamagnetic properties. The method is characterized by steps of preparing a thermally conductive composition by dispersing the thermally conductive fibers and the non-fibrous thermally conductive filler in the polymer matrix material, applying magnetic force to the thermally conductive composition, and solidifying or curing the polymer matrix material.

Other aspects and advantages of the invention will become apparent from the following description.

Embodiments of the present invention will be described in detail below.

In one embodiment of the present invention, a thermally conductive body is formed from a thermally conductive composition that includes a polymer matrix material, thermally conductive fibers and a non-fibrous thermally conductive filler.

The average fiber diameter of thermally conductive fibers is in a range of 5 to 15 µm, while the average fiber length of the thermally conductive fiber is in a range of 70 to 130 µm.

The thermally conductive fibers contain fine fibers having a fiber length of 25 µm or less in no more than 20 percent of the entire quantity (numbers) of the thermally conductive fibers. In addition, the thermally conductive fibers have diamagnetic properties and such thermally conductive fibers are oriented in a fixed direction in the thermally conductive body.

The polymer matrix material may be selected according to the required performance, such as mechanical strength, heat resistance and durability, and its chemical composition and method of hardening are not especially limited. Examples of the polymer matrix materials include thermoplastic or thermosetting resins, such as epoxy resin and urethane resin, rubber materials including synthetic rubbers, such as silicone rubber and fluorocarbon rubbers, and various kinds of thermoplastic elastomers. The polymer matrix materials may also include uncured materials, which can produce a polymer matrix by a curing reaction. These polymer matrix materials may be solely blended or may be blended in combinations of two or more in the composition.

Among polymer matrix materials, a silicone rubber is preferable, since it is excellent in heat resistance and has good adhesion and conformity to electronic parts. The silicone rubber can be obtained by curing polyorganosiloxane, which is its raw material. Physical states for silicone rubber include a gelatinous state and foamed states as well as an elastomeric state. The method of curing silicone rubber is not especially limited, and can utilize a radical reaction of an organic peroxide, an addition reaction in which polydimethylsiloxane containing a vinyl group and polyorganosiloxane having a hydrogen atom coupled to a silicon atom are reacted in the presence of a platinum-based catalyst, and a condensation reaction that produces a condensation product during curing. The one-component type and the two-component type can be mentioned as the kinds of silicone rubber.

Among silicone rubbers, a silicone rubber that is obtained by curing a liquid addition reaction type polyorganosiloxane is preferable for the polymer matrix material. Becauseliquid addition reaction type polyorganosiloxane has low viscosity, it is excellent in loading property for thermally conductive fibers and a non-fibrous thermally conductive filler. That is, use of liquid addition reaction type polyorganosiloxane can increase the amounts of thermally conductive fibers and a non-fibrous thermally conductive filler to be blended in a composition. Liquid addition reaction type polyorganosiloxane, which has a polymerization degree of around 100 to 2000 and low viscosity, is excellent in formability and can impart excellent flexibility to a resultant thermally conductive body.

From the standpoint of good formability, the viscosity of a silicone rubber material (at 25°C) is preferably 1000 mPa·s or less and more preferably 500 mPa·s or less. If this viscosity exceeds 1000 mPa·s, air bubbles can be easily mixed into a thermally conductive composition and removal of such bubbles becomes difficult.

Thermally conductive fibers have diamagnetic properties. When magnetic force is applied to such thermally conductive fibers, the thermally conductive fibers can be oriented parallel to the line of magnetic force or orthogonal thereto. Examples of thermally conductive fibers include a polyethylene fiber, a polypropylene fiber, a polyester fiber, a polyallylene sulfide fiber, an aramid fiber, a polyamide fiber, and a carbon fiber. The thermally conductive fibers may be shaped as a whisker, a coil or a tube. These thermally conductive fibers may be singly used or may be used in combinations of two or more kinds. Among thermally conductive fibers, a carbon fiber, more preferably, a carbon fiber having a thermal conductivity of 100 W/m·K or more at least in one direction (preferably in the direction of the fiber axis), are preferable for the thermally conductive fibers, because of their excellent thermal conductivity. Concrete examples of carbon fiber include a pitch-based carbonfiber, a polyacrylonitrile-based carbon fiber, and a rayon-based carbon fiber. Carbon fiber is made by carbonizing or graphitizing melt spun fiber pitch. Among carbon fibers, a carbon fiber using a mesophase pitch as its a raw material is preferable for the thermally conductive fiber, since it has higher thermal conductivity in the direction of the fiber length. Furthermore, because of higher thermal conductivities, it is preferable to use a carbon fiber subjected to a carbonizing treatment at not less than 1000°C is preferable, more preferably, subjected to a graphitizing treatment at not less than 2000°C.

The average diameter of thermally conductive fibers is in a range of 5 to 15 µm, and preferably 7 to 12 µm. If this average diameter of the fibers is less than 5 µm, the strength of thermally conductive fibers becomes insufficient. As a result, thermally conductive fibers may be easily broken into fine powders when these fibers are dispersed in the polymer matrix material, increasing the viscosity of the thermally conductive composition. On the other hand, if the average diameter of the thermally conductive fibers exceeds 15 µm, it becomes difficult to orient such fibers in a direction in the composition. The average length of the thermally conductive fibers is in a range of 70 to 130 µm, preferably 80 to 120 µm, and more preferably 83 to 110 µm. If this average length of the fibers is less than 70 µm, the viscosity of a thermally conductive composition may increase. On the other hand, if the average length of thermally conductive fibers exceeds 130 µm, entanglement of the fibers may increase the viscosity of a thermally conductive composition and make the orientation of the thermally conductive fibers difficult.

The presence of powdery fine fibers in thermally conductive fibers causes a thermally conductive composition to have high viscosity. A suitable thermally conductive composition has thermally conductive fibers containing fine fibers, having a fiber length of 25 µm or less, in not more than 20 percent of the total quantity (numbers) of the thermally conductive fibers, preferably not more than 15 percent, and more preferably not more than 12 percent in quantity. If the quantity of these fine fibers exceeds 20 percent of the total quantity of the thermally conductive fibers, this may increase the viscosity of the thermally conductive composition. Accordingly, it becomes difficult to orient the thermally conductive fibers in the composition, and thus the resultant thermally conductive body cannot exhibit high thermal conductivity. The fiber length and the percentage in quantity of fine fibers can be determined by use of, for example, an image analyzer (LUZEX®, manufactured by NIREKO Corporation) .

Thermally conductive fibers can be obtained by grinding fibers using various methods during or after manufacturing the thermally conductive fibers. As grinding methods, a hammer mill, a ball mill, a vibration ball mill, a blade mill, a jet mill, a tornado mill, a mill mixer, and a Henschel mixer can be used. Carbon fiber is preferable for the thermally conductive fibers, because desired thermally conductive fibers as above-described can be obtained easily by primarily grinding fibers into chopped fibers with a cutting machine during or after the manufacturing of the thermally conductive fibers, and by secondary grinding of the chopped fibers using the above grinding methods.

The amount of thermally conductive fibers in a thermally conductive composition is preferably in a range of 50 to 150 parts by weight, and more preferably 60 to 140 parts by weight, with respect to 100 parts by weight of a polymer matrix material. If the amount of thermally conductive fibers in a thermally conductive composition is less than 50 parts by weight, excellent thermal conductivity cannot be obtained in a resultant thermally conductive body. On the other hand, if this amount of thermally conductive fibers exceeds 150 parts by weight, the viscosity of the thermally conductive composition may excessively increase.

The non-fibrous thermally conductive filler is not filler obtained by grinding fibers and it has particles in spherical or other irregular shapes. It is preferred that the shape of the non-fibrous thermally conductive filler be spherical, because secondary aggregation, with resulting defects, such as irregularities on the surface of a thermally conductive body, rarely occur. Because of their excellent thermal conductivity, the non-fibrous thermally conductive filler is preferably at least one selected from the group consisting of aluminum oxide, boron nitride, aluminum nitride, silicon carbide and silicon dioxide. The average particle size of the non-fibrous thermally conductive filler is preferably in a range of 0.1 to 100 µm, more preferably in a range of 1 to 50 µm. If this average particle size is less than 0.1 µm, the specific surface area of the non-fibrous thermally conductive filler increases. This can excessively increase the viscosity of a thermally conductive composition. On the other hand, if the average particle size of the non-fibrous thermally conductive filler exceeds 100 µm, the surface condition of a thermally conductive body may degrade due to, for example, the formation of irregularities on the surface of the thermally conductive body.

The amount of the non-fibrous thermally conductive filler in a thermally conductive composition is preferably in a range of 300 to 600 parts by weight, more preferably 400 to 600 parts by weight, with respect to 100 parts by weight of a polymer matrix material. If this amount is less than 300 parts by weight, sufficient thermal conductivity may not be provided to the thermally conductive body. On the other hand, if said amount exceeds 600 parts by weight, this may excessively increase the viscosity of the thermally conductive composition. For the these reasons, it is preferred that the thermally conductive composition contains 50 to 150 parts by weight of thermally conductive fibers and 300 to 600 parts by weight of non-fibrous thermally conductive filler, with respect to 100 parts by weight of a polymer matrix material.

The thermally conductive composition may further contain other additives, such as a plasticizer, an adhesive, a reinforcing agent, a coloring agent, a heat resistance improving agent and the like.

The viscosity of a thermally conductive composition (at 25°C) is preferably 80000 mPa·s or less and more preferably 75000 mPa·s or less. If this viscosity exceeds 80000 mPa·s, it may become difficult for the thermally conductive fibers to be oriented in a direction in the thermally conductive composition. Setting of the viscosity of the thermally conductive composition, containing the thermally conductive fibers and the non-fibrous thermally conductive filler, to 80000 mPa.s or less can further prevent air bubbles from mixing into the thermally conductive composition, and make the thermally conductive fibers highly oriented in the composition.

The form of a thermally conductive body is, for example, a block or a sheet. It is preferred that the form of a thermally conductive body be a sheet because such a thermally conductive body formed into a sheet can be disposed between an electronic part and a cooling member and efficiently conduct heat generated from the electronic part. When a thermally conductive body is in the form of a sheet, it is preferred that the thickness of the sheet be 0.1 to 5 mm. If the sheet thickness is less than 0.1 mm, productivity and the workability during attachment may be worsened. On the other hand, if the sheet thickness exceeds 5 mm, heat resistance of the sheet may increase and its cost may be raised.

The thermal conductivity of the thermally conductive body is preferably 14 W/m·K or more and more preferably 15 W/m.K or more. If this thermal conductivity is less than 14 W/m·K, the thermally conductive body can not exhibit excellent thermal conductivity. It is preferred that the hardness of a thermally conductive body be 50 or less when measured with a type E durometer (in conformity with ISO 7619). If this hardness exceeds 50, a thermally conductive body is inferior in shape conformity to an electronic part and may be incapable of protecting electronic parts sufficiently.

Thermally conductive fibers are oriented in along a direction in a thermally conductive body. This improves the thermal conductivity of the thermally conductive body in that direction. For example, in the case of a thermally conductive body in the form of a sheet, the thermally conductive fibers are oriented in a direction, such as the direction along the surface of the sheet or the thickness direction of the sheet. This can improve the thermal conductivity of the thermally conductive body in the direction along the surface or the thickness direction.

In order to prepare a thermally conductive composition, thermally conductive fibers and a non-fibrous thermally conductive filler are mixed into a polymer matrix material. Then the mixture is stirred or kneaded until the thermally conductive fibers and the non-fibrous thermally conductive filler become almost uniformly dispersed. At this time, by controlling the percentage in quantity of the fine fibers having fiber length of 25 µm or less contained in the thermally conductive fibers within the above-described range, an increase in the viscosity of the thermally conductive composition due to the fine fibers is suppressed. Therefore, it is possible to increase the amount of the thermally conductive fibers and non-fibrous thermally conductive filler that can be blended in the composition, relative to the polymer matrix material.

A method of manufacturing a thermally conductive body includes a step of preparing a thermally conductive composition by dispersing thermally conductive fibers and a non-fibrous thermally conductive filler in a polymer matrix material as above-described, a step of shaping the thermally conductive composition by various shaping methods, a step of applying magnetic force to the thermally conductive composition to orient the thermally conductive fibers in the thermally conductive composition in a particular direction, and a step of solidifying or curing the polymer matrix material while maintaining the orientation of the thermally conductive fibers.

If a thermally conductive composition has a high viscosity in the step of applying the magnetic force for orienting the thermally conductive fibers, the movement of the thermally conductive fibers is impeded. Accordingly, it is hard to highly orient the thermally conductive fibers in a particular direction. Because the thermally conductive composition of the present invention contains the thermally conductive fibers and non-fibrous thermally conductive filler as above-described, an increase in the viscosity of the thermally conductive composition is suppressed. Therefore, the movement of the thermally conductive fibers in the thermally conductive composition may not be impeded. Furthermore, since the average fiber diameter and average fiber length of the thermally conductive fibers are set in specific ranges above-described, the entanglement of the thermally conductive fibers in the thermally conductive composition may not occur easily. Hence, this can avoid an increase in the viscosity of the composition and decrease the degree of orientation of the thermally conductive fibers due to entanglement of the fibers.

In the manufacturing method, a magnetic force source for applying magnetic force includes a superconductive magnet, a permanent magnet, an electromagnet, a coil and the like. Among magnetic force sources, a superconductive magnet is preferable because it can generate magnetic fields with high magnetic flux density. The magnetic flux density of the magnetic field generated from these magnetic force sources is preferably in a range of 1 to 30 Tesla. If this magnetic flux density is less than 1 Tesla, it may be hard to highly orient the thermally conductive fibers in the thermally conductive composition. On the other hand, it is practically difficult to obtain flux densities exceeding 30 Tesla.

A method of shaping the thermally conductive composition includes a bar coater method, a doctor blade method, an extrusion molding method (T-die method etc.), a calendaring method, a press forming method and a cast molding method.

In use, the thermally conductive body obtained is disposed, for example, between an electronic part and a heat-release member.

Advantages of the present invention will be described below.

In a thermally conductive body of this embodiment, thermally conductive fibers and a non-fibrous thermally conductive filler as above-described are blended in a polymer matrix material. This configuration can prevent the viscosity of a thermally conductive composition from increasing. For this reason, it is possible to increase the amounts of thermally conductive fibers and a non-fibrous thermally conductive filler in a thermally conductive composition. At the same time, it is possible to highly orient the thermally conductive fibers in the composition. In addition, the mixing of air bubbles into the thermally conductive composition is reduced and, even when air bubbles are mixed into the composition, they can be easily removed. Accordingly, it is possible to minimize the degradation of the thermal conductivity of a thermally conductive body due to the presence of air bubbles in the body. Accordingly, it is possible to obtain a thermally conductive body capable of exhibiting high thermal conductivity. Also, the thermal conductive fibers have diamagnetic properties and are directionally oriented in the body. As a result of this, the thermally conductive body can provide higher thermal conductivity.

Furthermore, it is unnecessary to use special materials as the thermally conductive fibers and the non-fibrous thermally conductive filler. Therefore, it is possible to provide a thermally conductive body having high practical applicability. Furthermore, prevention of increased viscosity of the thermally conductive composition allows better formability of the thermally conductive composition, resulting in easy manufacturing of a thermally conductive body. In addition, because the thermally conductive fibers have diamagnetic properties, it is possible to orient the thermally conductive fibers directionally by applying magnetic force to the thermally conductive composition.

In a thermally conductive body of this embodiment, it is preferred that carbon fibers having thermal conductivity of 100 W/m.K or more at least in one direction be blended as the thermally conductive fibers. This allows a thermally conductive body to exhibit higher thermal conductivity.

In a thermally conductive body of this embodiment, it is preferred that 50 to 150 parts by weight of thermally conductive fibers and 300 to 600 parts by weight of non-fibrous thermally conductive filler be blended, with respect to 100 parts by weight of a polymer matrix material. When a thermally conductive body is configured in this way, it is possible to prevent the viscosity of a thermally conductive composition from increasing and obtain a thermally conductive body having excellent thermal conductivity.

In a method of manufacturing a thermally conductive body of this embodiment, the thermally conductive fibers are oriented in a fixed direction by applying magnetic force to the thermally conductive composition. This manufacturing method can highly orient the thermally conductive fibers by utilizing the diamagnetic properties of the thermally conductive fibers.

It should be apparent to those skilled in the art that the present invention can be embodied in many other specific forms without departing from the spirit or scope of the invention. Particularly, it should be understood that the invention may be embodied in the following forms.

The conductive fibers and non-fibrous thermally conductive filler may be subjected to various surface treatments. For example, when the thermally conductive fibers and/or non-fibrous thermally conductive filler are subjected to a surface treatment by a coupling agent, such as a silane coupling agent or a titanate coupling agent, it is possible to improve their adhesion to the polymer matrix. Also, by applying an insulating coating to the thermally conductive fibers and/or non-fibrous thermally conductive filler, it is possible to ensure insulation between a thermally conductive body and an electronic part.

A film, a sheet, a non-woven fabric or a woven fabric may be laminated or embedded on the thermally conductive body or in the interior thereof. In this case, it is possible to improve the working property during mounting or to reinforce the thermally conductive body. Also, an insulating film may be laminated on the surface of the thermally conductive body to ensure insulation between the thermally conductive body and an electronic part. Furthermore, a self-adhesive layer or an adhesive layer may be laminated on the surface of the thermally conductive body to impart self-adhesion or adhesion against an electronic part or a heat-release member.

### [Examples]

Next, the above-described embodiments will be described more concretely by giving examples and comparative examples.

### (Example 1)

Addition reaction type polyorganosiloxane (liquid silicone, viscosity [at 25°C] : 400 mPa·s, specific gravity: 1.0, WACKER ASAHIKASEI SILICONE CO. , LTD.) as a polymer matrix material was mixed with carbon fibers (average fiber diameter: 10 µm, average fiber length: 110 µm, percent in quantity of fine fibers having a fiber length ≤ 25µm: 9.3%) as thermally conductive fibers and spherical alumina (average particle size: 3.2 µm) as a non-fibrous thermally conductive filler at the ratios shown in Table 1. This mixture was stirred until it became almost uniform. Then the mixture is defoamed to prepare a thermally conductive composition. Subsequently, this thermally conductive composition was shaped into a sheet. Then, the shaped thermally conductive composition was left to stand for 10 minutes in a magnetic field of 8 Tesla by a superconductive magnet. At this time, the superconductive magnet and the thermally conductive composition were arranged in such a manner that the lines of magnetic force from the superconductive magnet were parallel to the thickness direction of the thermally conductive composition. Then, the thermally conductive composition was heated at 120°C for 30 minutes to obtain a thermally conductive sheet (thickness 0.5 mm) . When this thermally conductive sheet was observed under a microscope, it was found that the carbon fibers were oriented in the thickness direction of the sheet.

### (Example 2)

A thermally conductive sheet (thickness: 0.5 mm) was obtained using the same composition and method as in Example 1, with the exception of using different carbon fibers (average fiber diameter: 10 µm, average fiber length: 83 µm, percent in quantity of fine fibers having a fiber length ≤ 25µm: 20.0%) as thermally conductive fibers. When this thermally conductive sheet was observed under a microscope, it was found that the carbon fibers are oriented in the thickness direction of the sheet.

### (Example 3)

A thermally conductive sheet (thickness: 0.5 mm) was obtained using the same composition and method as in Example 1, with the exception of using different carbon fibers (average fiber diameter: 10 µm, average fiber length: 103 µm, percent in quantity of fine fibers having a fiber length ≤ 25µm: 15.0%) as thermally conductive fibers. When this thermally conductive sheet was observed under a microscope, it was found that the carbon fibers were oriented in the thickness direction of the sheet.

### (Example 4)

A thermally conductive sheet (thickness: 0.5 mm) was obtained using the same addition reaction type polyorganosiloxane (liquid silicone, viscosity [at 25°C] : 400 mPa·s, specific gravity: 1.0, WACKER ASAHIKASEI SILICONE CO.,LTD.) and spherical alumina (average particle size: 3.2 µm) as in Example 1 and different carbon fibers (average fiber diameter: 7 µm, average fiber length: 80 µm, percent in quantity of fine fibers having a fiber length ≤ µm: 20.0%) as thermally conductive fibers at the ratios shown in Table 1 in the same manner as Example 1. When this thermally conductive sheet was observed under a microscope, it was found that the carbon fibers were oriented in the thickness direction of the sheet.

### (Example 5)

A thermally conductive sheet (thickness: 0.5 mm) was obtained using the same addition reaction type polyorganosiloxane (liquid silicone, viscosity [at 25°C] : 400 mPa·s, specific gravity: 1.0, WACKER ASAHIKASEI SILICONE CO.,LTD.) and spherical alumina (average particle size: 3.2 µm) as in Example 1 and different carbon fibers (average fiber diameter: 7 µm, average fiber length: 120 µm, percent in quantity of fine fibers having a fiber length ≤ 25µm: 9.0%) as thermally conductive fibers at the ratios shown in Table 1 in the same manner as Example 1. When this thermally conductive sheet was observed under a microscope, it was found that the carbon fibers were oriented in the thickness direction of the sheet.

### (Example 6)

A thermally conductive sheet (thickness: 0.5 mm) was obtained using the same addition reaction type polyorganosiloxane (liquid silicone, viscosity [at 25°C] : 400 mPa·s, specific gravity: 1.0, WACKER ASAHIKASEI SILICONE CO.,LTD.) and spherical alumina (average particle size: 3.2 µm) as in Example 1 and different carbon fibers (average fiber diameter: 12 µm, average fiber length: 120 µm, percent in quantity of fine fibers having a fiber length ≤ 25µm: 9.5%) as thermally conductive fibers at the ratios shown in Table 1 in the same manner as Example 1. When this thermally conductive sheet was observed under a microscope, it was found that the carbon fibers were oriented in the thickness direction of the sheet.

### (Comparative Example 1)

A thermally conductive sheet (thickness: 0.5 mm) was obtained from the same thermally conductive composition as in Example 1 by heating at 120°C for 30 minutes without applying a magnetic field. When this thermally conductive sheet was observed under a microscope, it was found that the carbon fibers were dispersed in the sheet in random directions.

### (Comparative Example 2)

A thermally conductive composition was prepared using the same composition and method as in Example 1, with the exception of using different carbon fibers (average fiber diameter: 10 µm, average fiber length: 75 µm, in quantity of fine fibers having a fiber length ≤ 25µm: 29.3%) as thermally conductive fibers. However, the obtained composition has very high viscosity and could not be shaped.

### (Comparative Example 3)

A thermally conductive sheet (thickness: 0.5 mm) was obtained by the same composition and method as in Example 1, with the exception of using different carbon fibers (average fiber diameter: 10 µm, average fiber length: 138 µm, percent in numbers of fine fibers: 15.0%) as thermally conductive fibers. When this thermally conductive sheet was observed under a microscope, it was found that the carbon fibers were dispersed in the sheet in indefinite directions. (Comparative Example 4)

A thermally conductive sheet (thickness: 0.5 mm) was obtained by the same composition and method as in Comparative Example 3, with the exception of reducing the amount of the fibers. When this thermally conductive sheet was observed under a microscope, it was found that the orientation of the carbon fibers was partially obtained, but the degree of the orientation was lower in comparison with the Examples 1 to 3, due to the entanglement of the carbon fibers.

### (Comparative Example 5)

A thermally conductive composition was obtained using the same addition reaction type polyorganosiloxane (liquid silicone, viscosity [at 25°C] : 400 mPa·s, specific gravity: 1.0, WACKER ASAHIKASEI SILICONE CO., LTD.) and spherical alumina (average particle size: 3.2 µm) as in Example 1 and different carbon fibers (average fiber diameter: 3 µm, average fiber length: 50 µm, percent in quantity of fine fibers having a fiber length ≤ 25µm: 80.5%) as thermally conductive fibers at the ratios shown in Table 1 in the same manner as Example 1. However, the obtained composition had very high viscosity and could not be shaped.

### (Comparative Example 6)

A thermally conductive sheet (thickness: 0.5 mm) was obtained using the same addition reaction type polyorganosiloxane (liquid silicone, viscosity [at 25°C] : 400 mPa·s, specific gravity: 1.0, WACKER ASAHIKASEI SILICONE CO.,LTD.) and spherical alumina (average particle size: 3.2 µm) as in Example 1 and different carbon fibers (average fiber diameter: 20 µm, average fiber length: 150 µm, percent in quantity of fine fibers having a fiber length ≤ 25µm: 8.0%) as thermally conductive fibers at the ratios shown in Table 1 in the same manner as Example 1. When this thermally conductive sheet was observed under a microscope, it was found that the orientation of the carbon fibers was partially obtained, but the degree of the orientation was lower in comparison with the Examples 1 to 6, due to the entanglement of the carbon fibers.

### (Evaluation)

The viscosity of the thermally conductive composition of each Examples and Comparative Example at 25°C was measured with a rotary viscometer. Also, the thermal conductivity of the thermally conductive sheet obtained in each Example and Comparative example was measured according to ASTM D5470 (sample size: 10 x 10 x 2 mm, amount of heat applied: 4W). Note that, in order to reduce the dispersion of measurements, the thermal conductivity of each of the thermally conductive sheets was measured in the thickness direction when the sheet was compressed 50% in its thickness. The evaluation results of Examples and Comparative examples are also shown in Table 1.

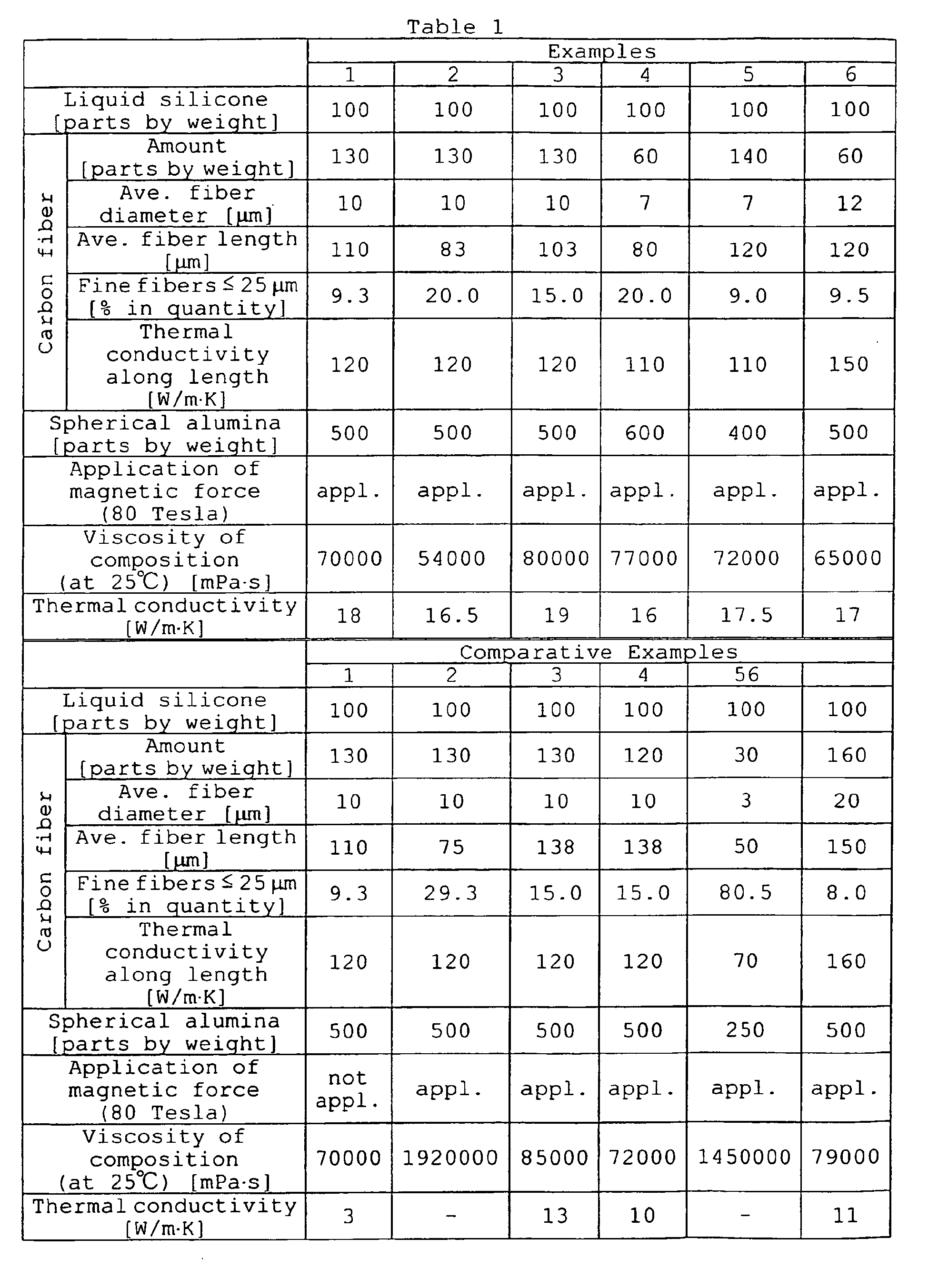

As shown in Table 1, in Examples 1 to 6, the viscosity of the thermally conductive compositions show values of 80000 Pas or less. Therefore, it is evident that an increase in the viscosity due to the blending of thermally conductive fibers is suppressed. The thermally conductive sheets of Examples 1 to 6 have high thermal conductivities of 14 W/m.K or higher, as shown in Table 1. Accordingly, these thermally conductive sheets can exhibit high thermal conductivity.

In contrast, the thermally conductive sheet of Comparative Example 1 has a lower value of thermal conductivity than that of in Example 1, since the thermally conductive fibers in Comparative Example 1 are not oriented in the thickness direction of the sheet. In Comparative Example 2, the viscosity of the composition is very high in comparison with the Examples and other Comparative Examples, since the amount of the fine fibers in the thermally conductive fibers used exceeds 20 percent in quantity. Therefore, the composition of Comparative Example 2 could not be shaped. Even if the composition of Comparative Example 2 is heated for curing, the curing reaction of liquid silicone may be impeded by the fine fibers and this composition will not be cured. Therefore, this composition is not practicable. In Comparative Examples 3 and 4, the average fiber length of the carbon fibers exceeds 130 µm, and hence the degree of orientation of the carbon fibers decreases due to entanglement of the fibers. Accordingly, the thermal conductivities of the sheets of Comparative Examples 3 and 4 show lower values than that in Example 3. In Comparative Example 5, use of short carbon fibers (average fiber length: 50µm) significantly increased the viscosity of thermally conductive composition. Therefore, the resultant composition could not be shaped. In Comparative Example 6, thicker and longer carbon fibers (average fiberdiameter: 20µm, average fiber length: 150µm) were used as the thermally conductive fibers. Such fibers cannot be oriented easily, therefore, the thermal conductivity of the sheet was lower than the Examples.

## Claims

1. A thermally conductive body formed from a thermally conductive composition, **characterized in that** the thermally conductive composition includes:
a polymer matrix material;
thermally conductive fibers, wherein average fiber diameter of the thermally conductive fibers is in a range from 5 to 15 µm and average fiber length of the thermally conductive fibers is in a range from 70 to 130 µm, and wherein the thermally conductive fibers contain fine fibers having a length of 20 µm or less in not more than 20 percent of the entire quantity of the thermally conductive fibers; and
a non-fibrous thermally conductive filler;
wherein the thermally conductive fibers further have diamagnetic properties, and wherein, in the thermally conductive body, the thermally conductive fibers are directionally oriented.

2. The thermally conductive body according to Claim 1, **characterized in that** the thermally conductive fibers are carbon fibers having a thermal conductivity of 100 W/m·K or more in at least one direction.

3. The thermally conductive body according to Claims 1 or 2, **characterized in that** the thermally conductive composition contains the thermally conductive fibers in a range from 50 to 150 parts by weight and the non-fibrous thermally conductive filler in a range from 300 to 600 parts by weight, with respect to 100 parts by weight of the polymer matrix material.

4. The thermally conductive body according to any one of the preceding Claims, **characterized in that** average fiber length of the thermally conductive fibers is in a range from 80 to 120 µm.

5. The thermally conductive body according to any one of the preceding Claims, **characterized in that** average fiber length of the thermally conductive fibers is in a range from 83 to 110 µm.

6. The thermally conductive body according to any one of the preceding Claims, **characterized in that** average fiber diameter of the thermally conductive fibers is in a range from 7 to 12µm.

7. The thermally conductive body according to any one of the preceding Claims, **characterized in that** the polymer matrix material is addition reaction type polyorganosiloxane.

8. The thermally conductive body according to any one of the preceding Claims, wherein the non-fibrous thermally conductive filler is one selected from the group consisting of aluminum oxide, boron nitride, aluminum nitride, silicon carbide and silicon dioxide.

9. A method for manufacturing a thermally conductive body including a polymer matrix material, thermally conductive fibers and a non-fibrous thermally conductive filler, wherein average fiber diameter of the thermally conductive fibers is in a range from 5 to 15 µm and average fiber length of the thermally conductive fibers is in a range from 70 to 130 µm, the thermally conductive fibers containing fine fibers having a length of 20 µm or less in not more than 20 percent of the entire quantity of thermally conductive fibers, and wherein the thermally conductive fibers further have diamagnetic properties, the method **characterized by** steps of:
preparing a thermally conductive composition by dispersing the thermally conductive fibers and the non-fibrous thermally conductive filler in the polymer matrix material,
applying magnetic force to the thermally conductive composition, and
solidifying or curing the polymer matrix material.

10. The thermally conductive body according to any one of claims 1 to 8, **characterized in that** the viscosity of the thermally conductive composition at 25 °C is 80000 mPa·s or less.

## Patentansprüche

1. Ein wärmeleitender Körper ausgebildet aus einer wärmeleitenden Zusammensetzung, **dadurch gekennzeichnet, dass** die wärmeleitende Zusammensetzung
ein polymeres Matrixmaterial;
wärmeleitende Fasern, wobei der durchschnittliche Faserdurchmesser der wärmeleitenden Fasern in einem Bereich von 5 bis 15 µm liegt und die durchschnittliche Faserlänge der wärmeleitenden Fasern in einem Bereich von 70 bis 130 µm liegt, und wobei die wärmeleitenden Fasern nicht mehr als 20 Prozent der Gesamtmenge der wärmeleitenden Fasern an feinen Fasern, die einer Länge von 20 µm oder weniger aufweisen, umfassen; und
einen nicht-faserförmigen wärmeleitenden Füllstoff, umfasst;
wobei die wärmeleitenden Fasern weiterhin diamagnetische Eigenschaften aufweisen, und wobei die wärmeleitenden Fasern in dem wärmeleitenden Körper richtungsorientiert sind.

2. Der wärmeleitende Körper nach Anspruch 1, **dadurch gekennzeichnet, dass** die wärmeleitenden Fasern Kohlenstofffasern sind, die in mindestens eine Richtung eine Wärmeleitfähigkeit von 100 W/m·K oder mehr aufweisen.

3. Der wärmeleitende Körper nach Anspruch 1 oder 2, **dadurch gekennzeichnet, dass** die wärmeleitende Zusammensetzung die wärmeleitenden Fasern in einem Bereich von 50 bis 150 Gewichtsteilen und den nicht-faserförmigen wärmeleitenden Füllstoff in einem Bereich von 300 bis 600 Gewichtsteilen, bezogen auf 100 Gewichtsteile des polymeren Matrixmaterials, umfasst.

4. Der wärmeleitende Körper nach einem der vorhergehenden Ansprüche, **dadurch gekennzeichnet, dass** die durchschnittliche Faserlänge der wärmeleitenden Fasern in einem Bereich von 80 bis 120 µm liegt.

5. Der wärmeleitende Körper nach einem der vorhergehenden Ansprüche, **dadurch gekennzeichnet, dass** die durchschnittliche Faserlänge des wärmeleitenden Fasern in einem Bereich von 83 bis 110 µm liegt.

6. Der wärmeleitende Körper nach einem der vorhergehenden Ansprüche, **dadurch gekennzeichnet, dass** der durchschnittliche Faserdurchmesser der wärmeleitenden Fasern in einem Bereich von 7 bis 12 µm liegt.

7. Der wärmeleitende Körper nach einem der vorhergehenden Ansprüche, **dadurch gekennzeichnet, dass** das polymere Matrixmaterial ein Polyorganosiloxan des Additionsreaktionstyps ist.

8. Der wärmeleitende Körper nach einem der vorhergehenden Ansprüche, wobei der nichtfaserförmige wärmeleitende Füllstoff ein Füllstoff ausgewählt aus der Gruppe bestehend aus Aluminiumoxid, Bornitrid, Aluminiumnitrid, Siliciumcarbid und Siliciumdioxid ist.

9. Ein Verfahren zu Herstellung eines wärmeleitenden Körpers umfassend ein polymeres Matrixmaterial, wärmeleitende Fasern und einen nicht-faserförmigen wärmeleitenden Füllstoff, wobei der durchschnittliche Faserdurchmesser der wärmeleitenden Fasern in einem Bereich von 5 bis 15 µm liegt und die durchschnittliche Faserlänge der wärmeleitenden Fasern in einem Bereich von 70 bis 130 µm liegt, wobei die wärmeleitenden Fasern nicht mehr als 20 Prozent der Gesamtmenge der wärmeleitenden Fasern an feinen Fasern, die einer Länge von 20 µm oder weniger aufweisen, umfassen, und wobei die wärmeleitenden Fasern weiterhin diamagnetische Eigenschaften aufweisen, wobei das Verfahren durch die Schritte:
Bereitstellen einer wärmeleitenden Zusammensetzung durch Verteilen der wärmeleitenden Fasern und des nicht-faserförmigen wärmeleitenden Füllstoffs in dem polymeren Matrixmaterial,
Anwenden einer magnetischen Kraft auf die wärmeleitende Zusammensetzung, und
Verfestigen oder Härten des polymeren Matrixmaterials,
**gekennzeichnet** ist.

10. Der wärmeleitende Körper nach einem der Ansprüche 1 bis 8, **dadurch gekennzeichnet, dass** die Viskosität der wärmeleitenden Zusammensetzung bei 25 °C 80000 mPa·s oder weniger ist.

## Revendications

1. Corps thermoconducteur formé à partir d'une composition thermoconductrice, **caractérisé en ce que** la composition thermoconductrice englobe :
une matière de matrice polymère ;
des fibres thermoconductrices, le diamètre moyen des fibres thermoconductrices se situant dans la plage de 5 à 15 µm, et la longueur moyenne des fibres thermoconductrices se situant dans la plage de 70 à 130 µm, les fibres thermoconductrices contenant des fibres fines possédant une longueur de 20 µm ou moins en une quantité qui ne représente pas plus de 20 % de la quantité totale des fibres thermoconductrices ; et
une matière de charge thermoconductrice non fibreuse ;
les fibres thermoconductrices possédant en outre des propriétés diamagnétiques et, dans le corps thermoconducteur, les fibres thermoconductrices sont soumises à une orientation directionnelle.

2. Corps thermoconducteur selon la revendication 1, **caractérisé en ce que** les fibres thermoconductrices sont des fibres de carbone possédant une conductibilité thermique de 100 W/m·K ou plus dans au moins une direction.

3. Corps thermoconducteur selon la revendication 1 ou 2, **caractérisé en ce que** la composition thermoconductrice contient les fibres thermoconductrices dans la plage de 50 à 150 parties en poids et la matière de charge thermoconductrice non fibreuse dans la plage de 300 à 600 parties en poids, par rapport à 100 parties en poids de la matière de matrice polymère.

4. Corps thermoconducteur selon l'une quelconque des revendications précédentes, **caractérisé en ce que** la longueur moyenne des fibres thermoconductrices se situe dans la plage de 80 à 120 µm.

5. Corps thermoconducteur selon l'une quelconque des revendications précédentes, **caractérisé en ce que** la longueur moyenne des fibres thermoconductrices se situe dans la plage de 83 à 110 µm.

6. Corps thermoconducteur selon l'une quelconque des revendications précédentes, **caractérisé en ce que** le diamètre moyen des fibres thermoconductrices se situe dans la plage de 7 à 12 µm.

7. Corps thermoconducteur selon l'une quelconque des revendications précédentes, **caractérisé en ce que** la matière de matrice polymère est un polyorganosiloxane du type que l'on obtient via une réaction par addition.

8. Corps thermoconducteur selon l'une quelconque des revendications précédentes, dans lequel la matière de charge thermoconductrice non fibreuse est une matière choisie parmi le groupe constitué par l'oxyde d'aluminium, le nitrure de bore, le nitrure d'aluminium, le carbure de silicium et le dioxyde de silicium.

9. Procédé pour la fabrication d'un corps thermoconducteur englobant une matière de matrice polymère, des fibres thermoconductrices et une matière de charge thermoconductrice non fibreuse, dans lequel le diamètre moyen des fibres thermoconductrices se situe dans la plage de 5 à 15 µm, et la longueur moyenne des fibres thermoconductrices se situe dans la plage de 70 à 130 µm, les fibres thermoconductrices contenant des fibres fines possédant une longueur de 20 µm ou moins en une quantité qui ne représente pas plus de 20 % de la quantité totale des fibres thermoconductrices, et dans lequel les fibres thermoconductrices possèdent en outre des propriétés diamagnétiques, le procédé étant **caractérisé par** les étapes consistant à :
préparer une composition thermoconductrice en dispersant des fibres thermoconductrices et la matière de charge thermoconductrice non fibreuse dans la matière de matrice polymère ;
appliquer une force magnétique sur la composition thermoconductrice ; et
solidifier ou durcir la matière de matrice polymère.

10. Corps thermoconducteur selon l'une quelconque des revendications 1 à 8, **caractérisé en ce que** la viscosité de la composition thermoconductrice à 25 °C s'élève à 80.000 mPa.s ou moins.
